# EUROPÄISCHE PATENTSCHRIFT

(11) **EP 1 452 370 B1**
(45) Veröffentlichungstag und Bekanntmachung des Hinweises auf die Patenterteilung: **29.09.2010**
(21) Anmeldenummer: 03027596.0
(22) Anmeldetag: 02.12.2003
(51) Int. Cl.: B60J 7/20, B60J 7/10

(54) **Stauraum für ein abnehmbares KFZ-Dach**
Vehicle strorage compartment for a detachable vehicle roof
Coffre pour un toit amovible de véhicule

(30) Priorität: 28.02.2003 DE 10308762
(43) Veröffentlichungstag der Anmeldung: 01.09.2004
(73) Patentinhaber: Dr. Ing. h.c. F. Porsche AG, 70435 Stuttgart (DE)
(72) Erfinder: Scholz, Andre, 75446 Wiernsheim (DE); Armbruster, Reiner, 75417 Mühlacker (DE); Braun, Wolfgang, 73061 Ebersbach (DE)

(56) Entgegenhaltungen:
- DE-A1- 1 505 551
- DE-U1- 9 406 435
- JP-A- 4 358 924
- JP-A- 5 229 347
- JP-B2- 2 981 947
- US-A- 2 215 363
- US-A- 3 635 518
- US-A- 4 171 078
- US-A- 4 467 944
- US-A- 4 718 710
- US-A- 5 193 874

## Beschreibung

Die Erfindung betrifft ein Kraftfahrzeug mit einem abnehmbaren Dach nach dem Oberbegriff des Patentanspruchs 1, wie es aus der DE 94 06 435 U1 bekannt ist. Im vom Aufbau gelösten Zustand werden die zwei in einer Mittellängsebene trennbare Dachelemente in einen Stauraum des Aufbaus eingesetzt.

Es ist ein abnehmbares Dach bekannt, US 2,215 363, das über Führungseinrichtungen aus einer Schließstellung in eine Offenstellung und vice versa bewegbar ist. In der Offenstellung ruht das Dach in einem als Kofferraum ausgebildeten Stauraum.

Aus der US 3,635,518 geht ein von einem Kraftfahrzeug lösbares Dach aus formsteifem Kunststoff hervor, das in einer Gebrauchsstellung einen Fahrgastraum bspw. zwischen einem Windschutzscheibenrahmen und einem Rollbügel überwölbt. In der vom Kraftfahrzeug abgenommenen Stellung ist besagtes Dach in einem Stauraum unterbringbar, der mittels einer Haube abgedeckt wird. Zur Halterung des Dachs im Stauraum dienen Aufnahmen, die Ränder des Dachs umgreifen, wobei eine der Aufnahmen einen elastischen Abschnitt umfasst, der sich in eine den benachbarten Rand des Dachs freigebende Stellung bewegen lässt.

Aufgabe der Erfindung ist es, ein Kraftfahrzeug mit einem abnehmbaren Dach so zu gestalten, dass das Dach leicht in einem volumenmäßig vorgegebenen Stauraum eines Aufbaus des Kraftfahrzeugs einsetzbar ist, wobei aber auch sichergestellt sein soll, dass die Halterung im Stauraum für das Dach sich durch Einfachheit und gute Funktion auszeichnet und dass das Dach nicht beschädigt wird.

Diese Aufgabe wird nach der Erfindung durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das erste Dachelement und das zweite Dachelement des Dachs durch ihre übereinanderliegende Anordnung in einem kompakt ausgelegten Stauraum lagegünstig untergebracht werden können, und zwar mittels der Aufnahmen und der Haltevorrichtungen Der manuelle Einsetzvorgang der beiden Dachelemente in den Stauraum wird durch die erfindungsgemäßen nach oben offenen Aufnahmen erleichtert, die die Ecken der Dachelemente formschlüssig begrenzen. Dabei ist vorteilhaft, dass das erste Dachelement als unters Dachelement etwa um 180° gedreht zur Konstruktionslage des Dachs und das zweite Dachelement als oberes Dachelement in Konstruktionslage im Stauraum angeordnet ist. Die Aufnahmen werden durch Formabschnitte aufweisende Einsätze des Stauraums gebildet, wobei zumindest ein Teil der Aufnahmen mit Formabschnitten für das untere und das obere Dachelement versehen ist. Schließlich sind die Haltevorrichtungen als Zurrelement dargestellt, deren Enden unter Zwischenschaltung von Greifelementen mit fahrzeugfesten Stützgliedern zusammenwirken.

In der Zeichnung wird ein Ausführungsbeispiel der Erfindung gezeigt, das nachstehend näher beschrieben wird.

Es zeigen
- Fig. 1: eine Ansicht von oben auf ein Kraftfahrzeug,
- Fig. 2: eine Schrägansicht von vorne oben auf einen Stauraum des Kraftfahrzeugs,
- Fig. 3: eine Ansicht entsprechend Fig. 2 mit einem ersten Dachelement,
- Fig. 4: eine weitere Ansicht entsprechend Fig. 2 mit einem ersten Dachelement und einem zweiten Dachelement,
- Fig. 5: einen Schnitt nach der Linie V-V der Fig. 3,
- Fig. 6: einen Schnitt nach der Linie VI-VI der Fig. 4.

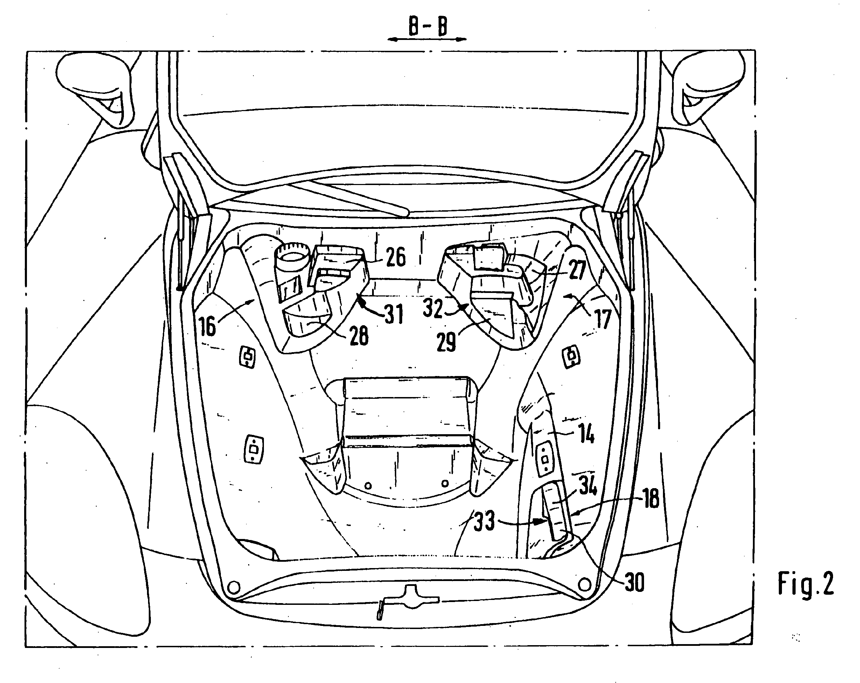

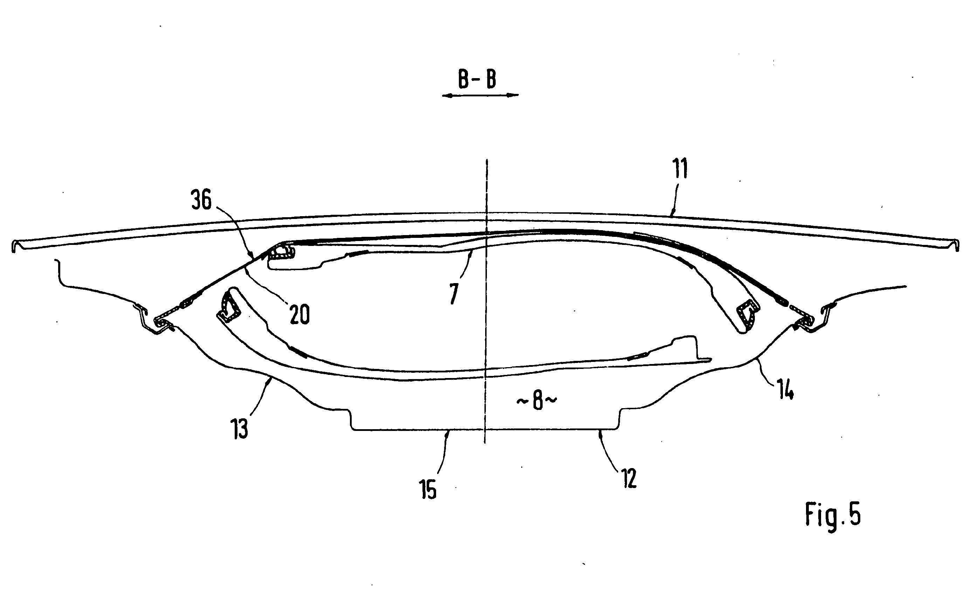

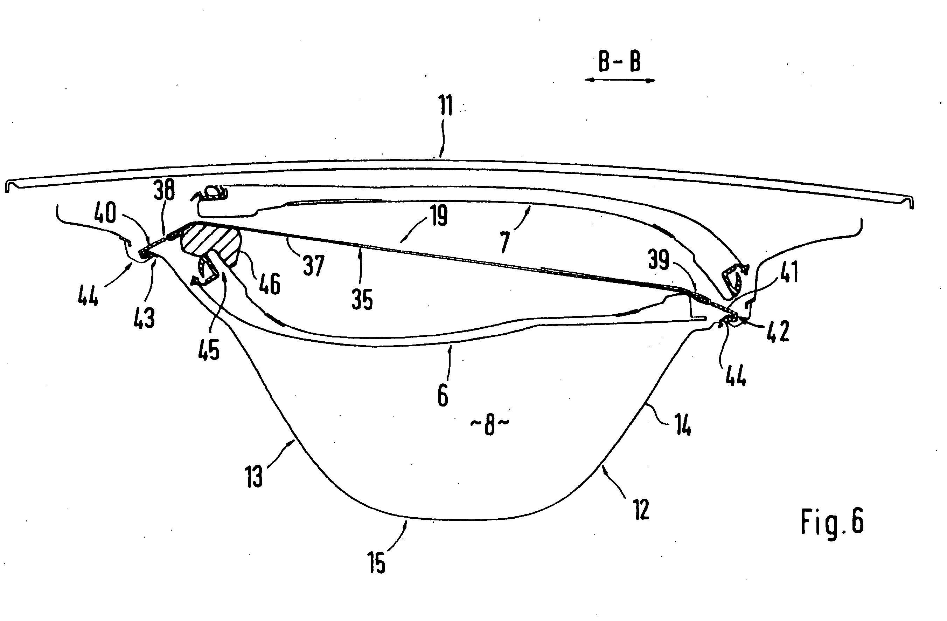

Ein Kraftfahrzeug 1 der Sportwagengattung - dynamisch und anmutendes Styling sowie anspruchsvolle Motorleistung - wird über ein zwischen Radachsen, jedoch benachbart der Hinterachse angeordnetes Antriebsaggregat - nicht dargestellt - angetrieben und umfasst einen Aufbau 2 mit einem Windschutzscheibenrahmen 3 und einem Rollbügel 4. Zwischen dem Windschutzscheibenrahmen 3 und dem Rollbügel 4 erstreckt sich ein abnehmbares Dach 5, das aus formsteifem Werkstoff bspw. Kunststoff besteht und zwei in einer Mittellängsebene A-A des Kraftfahrzeugs 1 zusammengesetzte erste und zweite Dachelemente 6 und 7 umfasst. In einem vom Aufbau 2 gelöstem Zustand des Dachs 5 besteht die Möglichkeit, es bzw. seine Dachelemente 6 und 7 in einen Stauraum 8 einzusetzen, der sich zwischen einem Bug 9 und einer Windschutzscheibe 10 erstreckt. Der Stauraum 8 ist nach Art eines Kofferraums ausgebildet und mittels einer Haube 11 abgedeckt, wobei eine trogförmige Stauraumwand 12 gegenüberliegende aufrechte Seitenwandabschnitte 13 und 14 besitzt, die in einen Boden 15 übergehen. In diesem so gestalteten Stauraum sind das erste Dachelement 6 und das zweite Dachelement 7 übereinanderliegend - Figuren 5 und 6 - angeordnet, in Aufnahmen 16,17 und 18 gelagert und mittels Haltevorrichtungen 19 und 20 - Figuren 2, 3 und 4 - festgelegt.

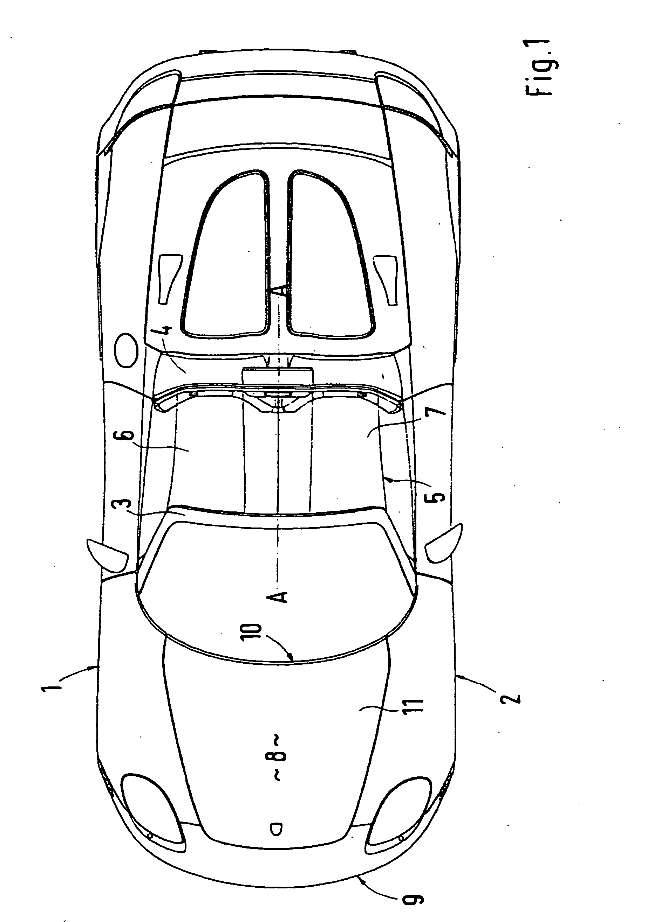

Dabei ist das erste Dachelement 6 als unteres Dachelement und das zweite Dachelement 7 als oberes Dachelement ausgeführt, welches erste Dachelement 6 d.h. das untere um 180° zur Konstruktionslage des Dachs 5 gedreht ist, wogegen das zweite Dachelement 7, also das obere, in etwa Konstruktionslage einnimmt - Figuren 5 und 6 -. Die Konstruktionslage des Dachs 5 ist aus Fig. 1 ersichtlich und entspricht dem Zustand, wenn es aufgesetzt zwischen Windschutzscheibenrahmen 3 und Rollbügel 4 verläuft.

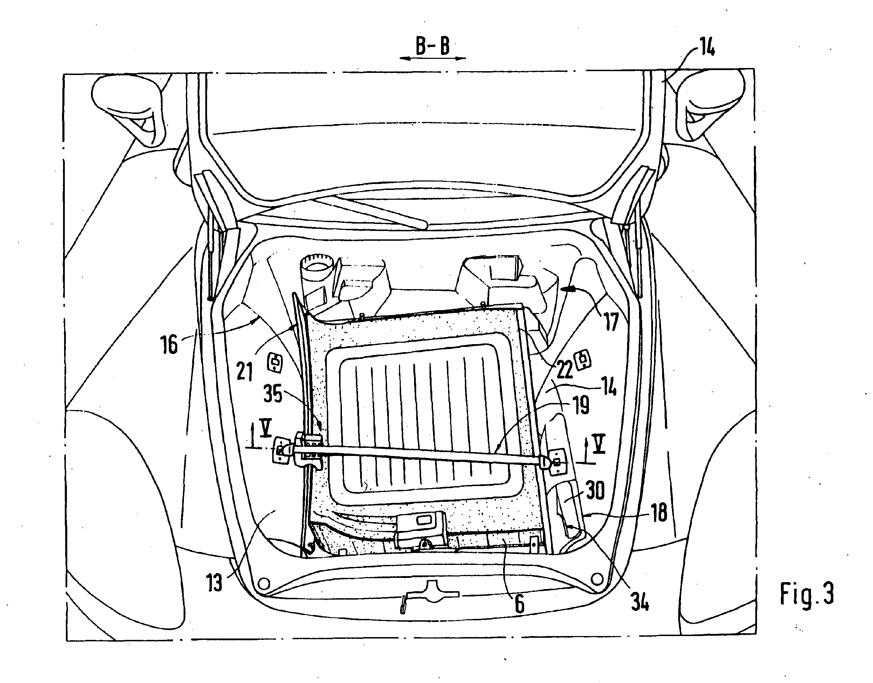

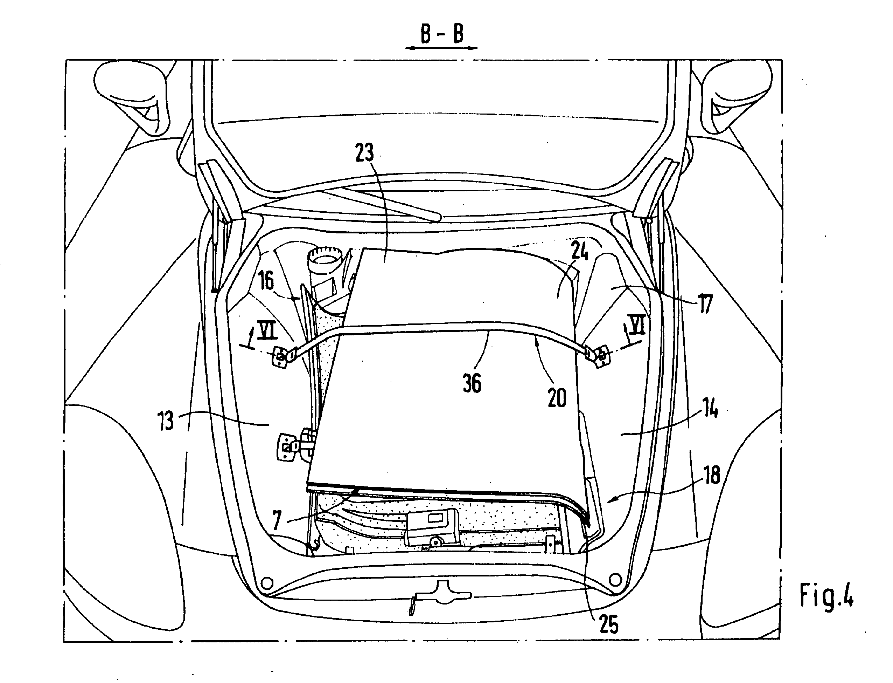

Die Aufnahmen 16, 17 und 18 begrenzen formschlüssig Ecken 21, 22 des ersten Dachelements 6 - Fig. 3 - bzw. Ecken 23, 24 und 25 des zweiten Dachelements 7 - Fig. 4 -. Darüber hinaus sind die Aufnahmen 16, 17 und 18 mit Formabschnitten 26, 27 und 28, 29 sowie 30 versehen, die in aus Kunststoff bestehenden Einsätzen 31, 32 und 33 des Stauraums 8 vorgesehen sind. In die Aufnahmen 16 und 17 sind die Formabschnitte 26,27 bzw. 28, 29 für das erste und das zweite Dachelements 6, 7 integriert. Die Aufnahme 18, umfassend einen schlitzförmigen Formabschnitt 34, ist in dem Seitenwandabschnitt 14 des Stauraums 8 angeordnet.

Die Haltevorrichtungen 19,20 für das erste Dachelement 6 und das zweite Dachelement 7 werden durch Zurrelemente 35, 36 gebildet, die sich zwischen den Seitenwandabschnitten 13,14 erstrecken, will heißen besagte Zurrelemente verlaufen in Fahrzeugquerrichtung B-B, und sowohl das erste untere Dachelement 6 wie auch das zweite obere Dachelement 7 sind mit wenigstens einem Zurrelement, nämlich 35 bzw. 36 gehalten.

Jedes Zurrelement z.B. 35 ist an seinen mit einem flexiblen Zurrband 37 - Fig. 6 - verbundenen Enden 38,39 mit Greifelementen 40,41 versehen, die einen U-förmigen Querschnitt aufweisen und mit laschenartigen Stützgliedern 42, 43 zusammenarbeiten. Die Stützglieder 42,43 sind Bestandteil von Beschlagteilen 44, die in die Seitenwandabschnitte 13,14 des Stauraums 8 versenkt integriert sind. Schließlich ist zwischen einem seitlichen Dachrand 45 des ersten unteren Dachelements 6 und den zugehörigen Zurrelement 35 bzw. Zurrband 37 ein Stützeinsatz 46 vorgesehen, der eine gezielte Führung des Zurrbandes 37 sicherstellt.

## Patentansprüche

1. Kraftfahrzeug (1) mit einem abnehmbaren Dach (5), das sich in einem vom Aufbau (2) des Kraftfahrzeugs gelösten Zustand in einen Stauraum (8) des Aufbaus einsetzen lässt und zwei in einer Mittellängsebene (A-A) des Aufbaus (2) trennbare Dachelemente (6, 7) des Dachs (5) als erstes Dachelement (6) und als zweites Dachelement (7) aufweist, **dadurch gekennzeichnet, dass** die beiden Dachelemente (6, 7) mittels Aufnahmen (16, 17, 18) und Haltevorrichtungen (19, 20) im Stauraum (8) in Lage gehalten werden und übereinander liegend in die nach oben offenen Aufnahmen (16, 17, 18) des Stauraums (8) eingesetzt und mittels der Haltevorrichtungen (19, 20) festgelegt sind und dass die Aufnahmen (16, 17, 18) die Ecken (21, 22; 23, 24, 25) der Dachelemente (6, 7) formschlüssig begrenzend ausgebildet sind.

2. Kraftfahrzeug nach Anspruch 1, **dadurch gekennzeichnet, dass** das erste Dachelement (6) als unteres Dachelement etwa um 180° gedreht zur Konstruktionslage und das zweite Dachelement (7) als oberes Dachelement in etwa in Konstruktionslage im Stauraum (8) angeordnet sind.

3. Kraftfahrzeug nach Anspruch 1, **dadurch gekennzeichnet, dass** die Aufnahmen (16,17,18) durch Formabschnitte (26,27; 28,29,30) aufweisende Einsätze (31,32,33) des Stauraums (8) dargestellt sind.

4. Kraftfahrzeug nach Anspruch 2 und 3, **dadurch gekennzeichnet, dass** zumindest ein Teil der Aufnahmen (16,17) mit Formabschnitten (26,27, 28,29) für das erste untere Dachelement (6) und das zweite obere Dachelement (7) versehen ist.

5. Kraftfahrzeug nach Anspruch 1, **dadurch gekennzeichnet, dass** die Haltevorrichtungen (19,20) als Zurrelemente (35,36) ausgebildet sind, deren Enden (38,39) unter Zwischenschaltung von Greifelementen (40,41) mit Stützgliedern (42, 43) zusammenwirken.

6. Kraftfahrzeug nach Anspruch 5, **dadurch gekennzeichnet, dass** die Stützglieder (42,43) als Beschlagteile (44) weitgehend versenkt in den Stauraum (8) integriert sind.

7. Kraftfahrzeug nach den Ansprüchen 1 und 5, **dadurch gekennzeichnet, dass** sowohl das erste untere Dachelement (6) als auch das zweite obere Dachelement (7) jeweils mit wenigstens einem Zurrelement (35, 36) in Lage gehalten werden.

8. Kraftfahrzeug nach Anspruch 7, **dadurch gekennzeichnet, dass** die Zurrelemente (35 und 36) in Fahrzeugquerrichtung (B-B) verlaufen.

9. Kraftfahrzeug nach Anspruch 8, **dadurch gekennzeichnet, dass** zwischen einem seitlichen Dachrand (45) des ersten unteren Dachelements (6) und dem zugehörigen Zurrelement (35) ein Stützeinsatz (46) vorgesehen ist.

## Claims

1. Motor vehicle (1) with a detachable roof (5) which, in a state released from the motor vehicle body (2), can be inserted into a storage compartment (8) in the body and has two roof elements (6, 7) of the roof (5) in the form of a first roof element (6) and in the form of a second roof element (7), which roof elements can be separated in a central longitudinal plane (A-A) of the body (2), **characterized in that** the two roof elements (6, 7) are kept in position in the storage compartment (8) by means of receptacles (16, 17, 18) and holding devices (19, 20) and are inserted lying one above the other into the upwardly open receptacles (16, 17, 18) in the storage compartment (8) and are secured by means of the holding devices (19, 20), and **in that** the receptacles (16, 17, 18) are designed so as to bound the corners (21, 22; 23, 24, 25) of the roof elements (6, 7) in a form-fitting manner.

2. Motor vehicle according to Claim 1, **characterized in that** the first roof element (6) as the lower roof element is arranged in the storage compartment (8) in a manner rotated approximately by 180° with respect to the construction position and the second roof element (7) as the upper roof element is arranged therein approximately in the construction position.

3. Motor vehicle according to Claim 1, **characterized in that** the receptacles (16, 17, 18) are produced by inserts (31, 32, 33) in the storage compartment (8), said inserts having shaped sections (26, 27; 28, 29, 30).

4. Motor vehicle according to Claims 2 and 3, **characterized in that** at least one part of the receptacles (16, 17) is provided with shaped sections (26, 27, 28, 29) for the first lower roof element (6) and the second upper roof element (7).

5. Motor vehicle according to Claim 1, **characterized in that** the holding devices (19, 20) are designed as lashing elements (35, 36), the ends (38, 39) of which interact with supporting members (42, 43) with the interconnection of gripping elements (40, 41).

6. Motor vehicle according to Claim 5, **characterized in that** the supporting members (42, 43) as fittings (44) are integrated in a substantially recessed manner in the storage compartment (8).

7. Motor vehicle according to Claims 1 and 5, **characterized in that** the first lower roof element (6) and the second upper roof element (7) are respectively kept in position by means of at least one lashing element (35, 36).

8. Motor vehicle according to Claim 7, **characterized in that** the lashing elements (35 and 36) run in the transverse direction (B-B) of the vehicle.

9. Motor vehicle according to Claim 8, **characterized in that** a supporting insert (46) is provided between a lateral roof edge (45) of the first lower roof element (6) and the associated lashing element (35).

## Revendications

1. Véhicule automobile (1) avec un toit amovible (5) qui, dans un état séparé de la superstructure (2) du véhicule automobile, peut être introduit dans un espace de rangement (8) de la superstructure et présente deux éléments de toit (6, 7) du toit (5) séparables dans un plan médian longitudinal (A-A) de la superstructure (2) sous la forme d'un premier élément de toit (6) et d'un deuxième élément de toit (7), **caractérisé en ce que** les deux éléments de toit (6, 7) sont maintenus en place dans l'espace de rangement (8) au moyen de logements (16, 17, 18) et de dispositifs de maintien (19, 20) et sont introduits en étant placés l'un au-dessus de l'autre dans les logements (16, 17, 18) de l'espace de rangement (8) ouverts vers le haut et sont fixés au moyen des dispositifs de maintien (19, 20) et **en ce que** les logements (16, 17, 18) sont configurés de façon à limiter en complémentarité de forme les coins (21, 22; 23, 24, 25) des éléments de toit (6, 7).

2. Véhicule automobile selon la revendication 1, **caractérisé en ce que** le premier élément de toit (6) est disposé dans l'espace de rangement (8) comme élément de toit inférieur en étant tourné d'environ 180° par rapport à la position de construction et le deuxième élément de toit (7) y est disposé comme élément de toit supérieur sensiblement dans la position de construction.

3. Véhicule automobile selon la revendication 1, **caractérisé en ce que** les logements (16, 17, 18) sont représentés par des pièces rapportées (31, 32, 33) de l'espace de rangement (8) présentant des parties profilées (26, 27; 28, 29, 30).

4. Véhicule automobile selon les revendications 2 et 3, **caractérisé en ce qu'**au moins une partie des logements (16, 17) sont pourvus de parties profilées (26, 27; 28, 29) pour le premier élément de toit inférieur (6) et pour le deuxième élément de toit supérieur (7).

5. Véhicule automobile selon la revendication 1, **caractérisé en ce que** les dispositifs de maintien (19, 20) se présentent sous la forme d'éléments d'arrimage (35, 36), dont les extrémités (38, 39) coopèrent avec des organes de support (42, 43) avec interposition d'éléments d'accrochage (40, 41).

6. Véhicule automobile selon la revendication 5, **caractérisé en ce que** les organes de support (42, 43) sont intégrés sous la forme de ferrures (44) en étant largement abaissés dans l'espace de rangement (8).

7. Véhicule automobile selon les revendications 1 et 5, **caractérisé en ce qu'**aussi bien le premier élément de toit inférieur (6) que le deuxième élément de toit supérieur (7) sont maintenus en place respectivement avec au moins un élément d'arrimage (35, 36).

8. Véhicule automobile selon la revendication 7, **caractérisé en ce que** les éléments d'arrimage (35, 36) s'étendent en direction transversale du véhicule (B-B).

9. Véhicule automobile selon la revendication 8, **caractérisé en ce qu'**il est prévu une pièce rapportée d'appui (46) entre un bord latéral de toit (45) du premier élément de toit inférieur (6) et l'élément d'arrimage correspondant (35).
